# EUROPÄISCHE PATENTSCHRIFT

(11) **EP 2 024 631 B1**
(45) Veröffentlichungstag und Bekanntmachung des Hinweises auf die Patenterteilung: **09.03.2011**
(21) Anmeldenummer: 07728106.1
(22) Anmeldetag: 13.04.2007
(51) Int. Cl.: F02M 35/02, F02M 35/024, B01D 46/52

(54) **LUFTFILTERGEHÄUSE FÜR EIN LUFTFILTERELEMENT**
AIR FILTER HOUSING FOR AN AIR FILTER ELEMENT
BOÎTIER DE FILTRE À AIR DESTINÉ À UN ÉLÉMENT DE FILTRE À AIR

(30) Priorität: 29.05.2006 DE 102006025236
(43) Veröffentlichungstag der Anmeldung: 18.02.2009
(73) Patentinhaber: MANN + HUMMEL GMBH, 71638 Ludwigsburg (DE)
(72) Erfinder: BLOSSEY, Werner, 71726 Benningen (DE); RIEGER, Mario, 71691 Freiberg (DE); EILERT, Lorenz, 38104 Braunschweig (DE)
(86) Internationale Anmeldenummer: PCT/EP2007/053641
(87) Internationale Veröffentlichungsnummer: WO 2007/137904

(56) Entgegenhaltungen:
- EP-A- 1 679 436
- EP-A2- 0 534 079
- WO-A-02/31340
- WO-A-2005/046841
- DE-A1- 2 630 875
- DE-A1- 10 328 002
- DE-C1- 3 705 951
- JP-A- 2003 161 216
- US-B1- 6 263 850

## Beschreibung

### Technisches Gebiet

Die Erfindung betrifft ein Luftfiltergehäuse für ein Luftfilterelement, mit wenigstens einem Gehäuseunterteil, in das das Luftfilterelement vollständig oder mit einem wesentlichen Teil seiner Länge einsetzbar ist und einem mit dem Gehäuseunterteil zu verbindenden Deckelelement, wobei an dem Gehäuseunterteil Anschlussstutzen zur Verbindung mit jeweils einer Schlauchleitung vorgesehen sind.

### Stand der Technik

Luftfiltergehäuse sind oftmals so gestaltet, dass ein rohluftseitiger Anschlussstutzen, das zweiteilig ausgebildete Gehäuse mit dem darin eingesetzten Luftfilterelement und ein reinluftseitiger Anschlussstutzen in Flucht liegen, oder zumindest annähernd achsparallel sind. Um das Luftfilterelement, bei dem es sich entweder um einen Rundfilter oder um ein Kompaktluftfilterelement, aus gewickeltem Filterpapier handeln kann, wird der Luftanschlussschlauch am Anschlussstutzen des Deckelelements gelöst, und das Deckelelement wird vom Gehäuseunterteil abgenommen. Damit ist das Gehäuseunterteil frei zugänglich und das Luftfilterelement kann einfach ausgetauscht werden. Nachteilig ist jedoch, dass der Luftanschlussschlauch bei beengten Platzverhältnissen wie sie beispielsweise oft in Motorräumen von Fahrzeugen auftreten, nicht ausreichend lang und/oder flexibel ist, um am Deckelelement zu verbleiben, wenn dieses vom Gehäuseunterteil abgenommen wird. Das erforderliche Lösen des Schlauches und anschließende Verbinden benötigt einen erheblichen Zeitanteil bei der Durchführung des Filterelementwechsels. Außerdem besteht das Problem, dass die Schlauchverbindung unter Werkstattbedingungen oder gar den Baustellenbedingungen bei Nutzfahrzeugen nicht immer exakt hergestellt wird. Beispielsweise kann ein zu starkes Anziehen der Rohrschelle, welche den Luftanschlussschlauch auf dem Anschlussstutzen sichert, zu einem Bruch des üblicherweise aus Kunststoff bestehenden Luftfiltergehäuses führen.

Die Schrift EP 0 534 079 A2 zeigt einen Ansaugluftfilter bei dem die Zu- und Abführung für die Roh- und die Reinluft gemeinsam in einem ersten Gehäuseteil angeordnet sind und das zweite Gehäuseteil keine direkt nach außen führende Öffnung aufweist. Die Abführung der Reinluft erfolgt über einen Reinluftstutzen, der in dem von dem Luftfilterelement überdeckten Bereich im ersten Gehäuseteil angeordnet ist.

Aufgabe der Erfindung ist es daher, ein Luftfiltergehäuse der eingangs genannten Art so weiterzubilden, dass ein Wechsel des Filterelements schneller möglich ist und insbesondere ohne Lösen der Schlauchverbindung durchgeführt werden kann.

### Offenbarung der Erfindung

Diese Aufgabe wird durch ein Luftfiltergehäuse mit den Merkmalen des Anspruchs 1 gelöst.

In einer nicht beanspruchten Ausführungsform endet der Rohrstutzen am Deckelelement außerhalb des durch das Luftfilterelement überdeckten Querschnitts, das heißt, er ist nach außen abgespreizt. Dadurch wird im Deckelelement eine Strömungsumlenkung von dem seitlich am Luftfütergehäuse angeordneten Anschlussstutzen auf die Stirnseite des Luftfiltereinsatzelements bewirkt und die Zugänglichkeit beider Anschlussstutzen von einer Seite her verbessert. Beide Schläuche können am erfindungsgemäßen Luftfiltergehäuse angeschlossen bleiben, wenn das Deckelelement zu Wartungszwecken abgenommen wird.

Das nicht erfindungsgemäße Luftfiltergehäuse kann in beiden Strömungsrichtungen betrieben werden. Vorzugsweise wird die Rohluftseite an den Umlenkanschlussstutzen angeschlossen. Ein weiterer Vorteil des Luftfiltergehäuses besteht dann nämlich darin, dass bei einer Anordnung des Luftfiltergehäuses mit dem Deckelelement nach unten eine einfache Abscheidung von Wasser möglich ist. Angesaugtes Wasser wird während der Umlenkung des Luftstroms infolge der Schwerkraft und der zusätzlichen Fliehkraft gegen die Innenseite des Deckelelements bewegt. Dort kann eine Vertiefung vorgesehen sein, von welcher aus sich ein Wasserauslassventil zur Außenseite hin erstreckt. Das Wasserauslassventil ist insbesondere so ausgelegt, dass es erst bei einem bestimmten Druck öffnet, wenn also eine Wassersäule bestimmter Höhe vorliegt.

Der Abscheideffekt wird durch die zusätzlichen Fliehkräfte erhöht, wenn die Strömungsumlenkung über einen größeren Winkel erfolgt. Besonders vorteilhaft ist es daher, wenn die Mündung des Umlenkanschlussstutzens einen Winkel von weniger als 90° mit einer durch das Luftfilterelement führenden Strömungshauptrichtung einschließt, also nahezu rückwärts in Bezug auf die Hauptströmungsrichtung ausgerichtet. Zudem öffnen sich bei dieser Ausführungsform beide Anschlussstutzen zu einer Seite hin, auch wenn sie nicht exakt parallel ausgerichtet sein sollten, so dass das Deckelelement besonders gut zugänglich ist.

Besonders vorteilhaft ist es in diesem Fall, das Anschlussstutzen-Ansatzelement seitlich an das Gehäuseunterteil anzuformen und dabei eine einheitliche ebene Trennebene zu bilden, an der vorzugsweise das Luftfiltereinsatzelement mit seinem Dichtungsring direkt anliegt und an der auch der Umlenkanschlussstutzen endet. Damit kann das Deckelelement mit einem Kragen ausgebildet werden, der innerhalb einer Ebene liegt. Hierdurch ist es insbesondere einfach möglich, beide Gehäuseteile und den Luftfiltereinsatz dichtend miteinander zu verbinden.

Eine Ausführungsform eines erfindungsgemäßen Luftfiltergehäuses sieht eine nur seitliche Strömungsumlenkung vor, in einem Winkel von größer 90° in Bezug auf die Strömungshauptrichtung. Dabei ist vorgesehen, an wenigstens einer Seite des Gehäuseunterteils einen Kragen auszubilden, welcher außerhalb des von dem Luftfiltereinsatzelement abgedeckten Querschnitt angeordnet ist, sodass das Luftfilterelement leicht an dem Kragen vorbei entnommen werden kann. Um überhaupt eine Strömungsumlenkung bewirken zu können, muss der Kragen über die Abdichtungsebene bzw. das stirnseitige Ende des Luftfilterelements hinausgehen. Von dem Kragen aus erstreckt sich dann der Umlenkanschlussstutzen nach außen hin, das heißt der lichte Innenraum wird durch den Umlenkanschlussstutzen nicht eingeengt. Das Filtereinsatzelement kann an dem Kragen vorbei entnommen werden. Das Deckelelement überdeckt das Volumen neben dem Kragenbereich, so dass eine einheitliche Haube ausgebildet ist, die den Umlenkanschlussstutzen und die Stirnseite des Luftfilterelements abdeckt und mit der auch die Strömungsumlenkung bewirkt wird. Montage und Demontage des Luftfiltergehäuses werden durch die Verbindung des Kompakt-Luftfilterelements mit einem Teil der Gehäusewandung erleichtert.

Vorzugsweise besitzt das Deckelelement einen geschlossenen Kragrand, der das Luftfilterelement an seinem umlaufenden Dichtring gegen eine entsprechende Auflage im Gehäuseunterteil presst. Der umlaufende Kragrand ist dabei ebenfalls so geformt, dass er an dem Kragenbereich für den Umlenkanschlussstutzen vorbei geschoben werden kann.

Vorteilhaft ist, den Kragrand für das Anpressen des Dichtungsrings des Luftfiltereinsatzelementes über mehrere Rippen an der Außenhaut des Deckelelements abzustützen. Hierdurch wird gewährleistet, dass allseitig ein ausreichend großer Anpressdruck auf den Dichtring des Luftfiltereinsatzelements bewirkt werden kann. Zugleich wird der Strömungswiderstand durch die vorzugsweise in Strömungsrichtung ausgerichteten schmalen Rippen nicht wesentlich beeinträchtigt.

Weiterhin ist es möglich, ein Abscheidegitter wie ein Schneefanggitter oder ein so genanntes Zigarettengitter vor der Strömungsumlenkung im Deckelelement vorzusehen. Es ist damit möglich, angesaugten Schnee bzw. angesaugte Asche seitlich abzuleiten, bevor diese auf die Stirnseite des Luftfiltereinsatzelementes treffen kann.

### Kurze Beschreibung der Zeichnungen

Die Erfindung wird nachfolgend mit Bezug auf die Zeichnung näher erläutert. Die Figuren zeigen im Einzelnen:
Fig. 1 eine erste aus dem Stand der Technik bekannte Ausführungsform eines Luftfiltergehäuses in Schnittansicht,

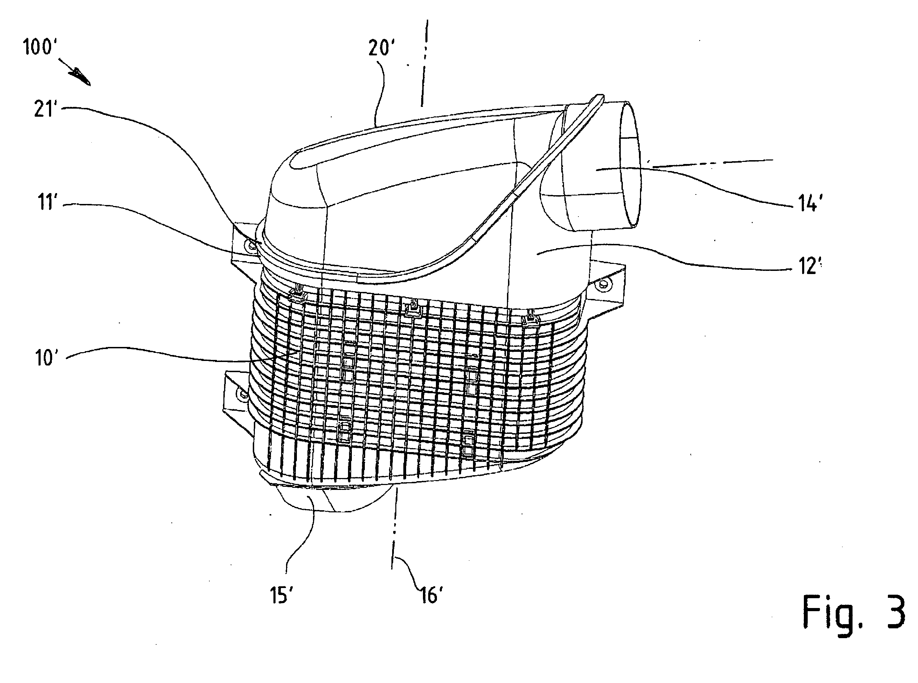

Fig. 2, 3 eine erfindungsgemäße Ausführungsform eines Luftfiltergehäuses in verschiedenen Montagestadien in perspektivischer Ansicht und
Fig. 4 eine Abwandlung der zweiten Ausführungsform, ebenfalls in perspektivischer Ansicht.

### Ausführungsform(en) der Erfindung

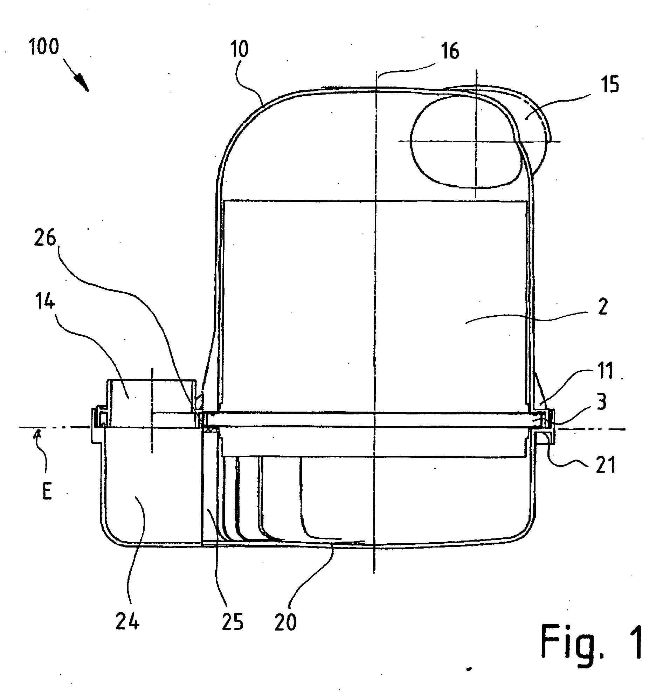

Figur 1 zeigt ein Luftfiltergehäuse 100 gemäß einer ersten bekannten Ausführungsform im Schnitt. Es setzt sich im Wesentlichen aus einem Gehäuseunterteil 10 und einem Deckelelement 20 zusammen. Beide schließen ein Luftfilterelement 2 ein, bei dem es sich insbesondere um ein gewickeltes Kompaktluftfilterelement handeln kann. Eine Hauptströmungsrichtung 16 durch das Luftfilterelement verläuft parallel zur Mittelachse des Luftfilterelements 2. An beiden Stirnseiten des Luftfilterelements 2 sind Hohlräume im Luftfiltergehäuse 100 ausgebildet, die in Anschlussstutzen 14, 15 enden. Beispielsweise dient der Anschlussstutzen 14 dem Anschluss eines Schlauches, durch welchen die ungefilterte Rohluft angesaugt wird.

Der mit dem Hohlraum im Deckelelement 20 in Verbindung stehende Anschlussstutzen ist als Umlenkanschlussstutzen 14 ausgebildet ist, das heißt, dieser liegt nicht in der Hauptströmungsrichtung 16 vor der Stirnseite des Luftfilterelements 2, sondern ist seitlich am Gehäuseunterteil 10 angebracht und liegt damit außerhalb desjenigen Querschnittsbereichs, der durch das Luftfilterelement 2 abgedeckt ist. Der Deckel 20 erweitert sich nach links sich, wobei der erweiterte Bereich 24 an dem Umlenkanschlussstutzen 14 mündet. Der Umlenkanschlussstutzen 14 ist damit so angeordnet, dass das Luftfilterelement 2 an ihm vorbei aus dem Gehäuseunterteil 10 entnommen werden kann, so dass auch eine am Umlenkanschlussstutzen 14 angebrachte Schlauchverbindung nicht gelöst zu werden braucht.

Der an das Gehäuseunterteil 10 angeformte Teil des Umlenkanschlussstutzens 14 und das Gehäuseunterteil 10 besitzen eine einheitliche Trennebene E, an der das Luftfilterelement 2 mit seinem Dichtring 3 anliegt. Zur Versteifung ist ein Kragrand 11 am Gehäuseunterteil 10 ausgebildet, der von einem Kragrand 21 des aufgesetzten Deckelelements 20 umfasst wird. Zugleich presst der Kragrand 21 des Deckelelements 20 auf den Dichtring 3 und drückt diesen auf die entsprechende Auflageschulter am Kragrand 11 des Gehäuseunterteils 10. Damit wird das Luftfilterelement 2 seitlich gegenüber dem Luftfiltergehäuse abgedichtet; Leckströmungen von Rohluft werden vermieden.

Im Bereich des Übergangs des Gehäuseunterteils 10 zu dem angeformten Umlenkanschlussstutzen 14 ist der Kragrand 11 nicht vollflächig abgestützt, da sich unterhalb von ihm der Luft führende Weg im Deckelelement 20 befindet. Um auch in diesem Bereich eine ausreichende Anpresswirkung auf den Dichtring 3 des Luftfilterelements 2 zu erzielen, ist ein Steg 26 vorgesehen, der an dem Dichtring 3 anliegt und der über Stützrippen 25 an der Außenhaut des Deckelelements 20 abgestützt ist.

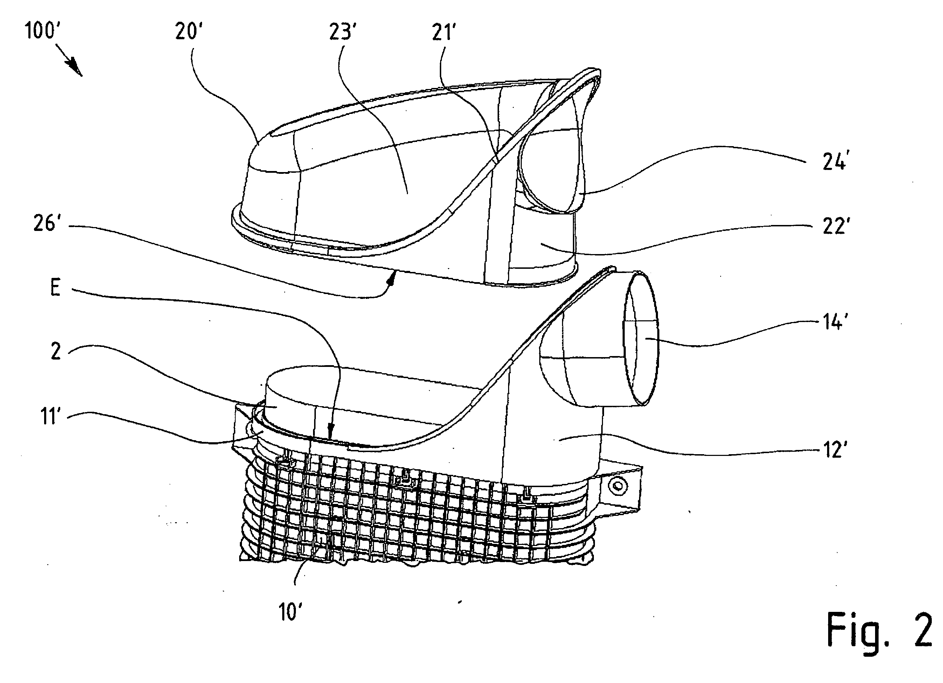

Figur 2 zeigt eine erfindungsgemäße Ausführungsform eines Luftfiltergehäuses 100', das wiederum ein Gehäuseunterteil 10' mit einem Anschlussstutzen 15' und ein darauf aufzusetzendes Deckelelement 20' umfasst. Auch bei dieser Ausführungsform liegt derjenige Anschlussstutzen, der mit dem Volumen im Deckelelement in Verbindung steht, außerhalb des Querschnittsbereichs, der durch ein in dem Gehäuseunterteil 10' anzuordnendes Lufitfilterelement 2 abgedeckt wird und ist als ein Umlenkanschlussstutzen 14' ausgebildet. Dessen Mündung schließt hier mit einer Hauptströmungsrichtung 16' einen Winkel ein, der bei dieser Ausführungsform insbesondere mehr als 90° beträgt. Der Umlenkanschlussstutzen 14' ist an einen Kragen 12' angeformt, der sich nicht nur seitlich außerhalb des durch den Luftfilter 2 abgedeckten Querschnitts, sondern auch über eine Abdichtungsebene E hinweg erstreckt und entsprechend weit vom Gehäuseunterteil 10' absteht.

Wie die Darstellung der Figur 2 von Gehäuseunterteil 10' und Deckelelement 20' vor der Montage auch zeigt, findet der Kragen 12' seine Entsprechung in einem Kragenabschnitt 22' am Deckelelement 20' und der Umlenkanschlussstutzen 14' in einem Stutzenansatz 24' am Deckelelement 20'.

Ein Kragrand 11' des Gehäuseunterteil 10 läuft von der Abdichtebene des Luftfilterelements 2, links im Bild, hoch auf den Kragen 12' bis über den Umlenkanschlussstutzen 14' hinweg. Ein entsprechend geformter Kragrand 21' ist am Deckelelement 20' vorhanden.

Der Dichtring des Luftfilterelements 2 hat wiederum einen in einer Ebene liegenden Auflagerand im Gehäuseunterteil 10', der hier aber nicht sichtbar ist. Um den Dichtring an den Auflagerand anzupressen, ist zusätzlich zum Kragrand 21' eine ebene Unterkante 26' am Deckelelement 20' vorhanden, die unterhalb des Kragenabschnitts 22' und eines Haubenabschnitts 23' verläuft. Wird das Deckelelement 20' auf das bzw. in das Gehäuseunterteil 10' eingesetzt, drückt die Unterkante 26' auf den Dichtring des Luftfilterelements 2 und dichtet dieses gegen seitliche Leckströmungen ab. Außerdem wird eine Abdichtung des Luftfiltergehäuse 100' selbst durch Dichtungen zwischen den Kragrändern 11', 21' bewirkt.

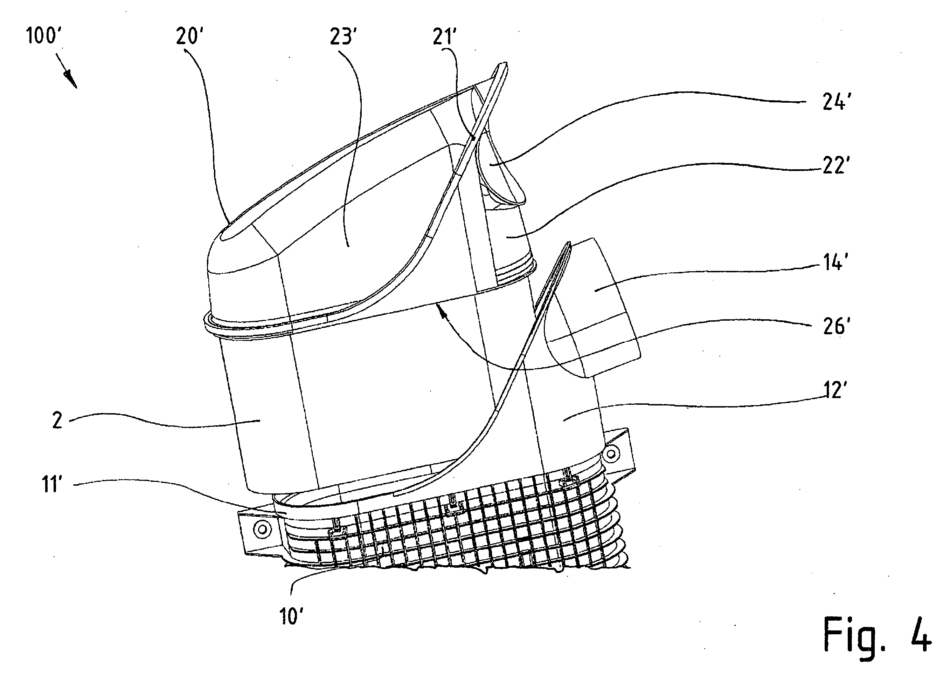

Figur 4 zeigt eine leicht abgewandelte Form des zuletzt beschriebenen Luftfiltergehäuses 100'. Deckelelement 20' und Gehäuseunterteil 10' sind unverändert. Lediglich das Luftfilterelement 2 ist hier fest mit dem Deckelelement 20' verbunden. Sie bilden eine zu Wartungszwecken austauschbare Einheit. Der Vorteil besteht insbesondere darin, dass das Deckelelement 20', das evtl. stark verschmutzt, wenn es mit der Rohluftansaugung verbunden ist, direkt mit ausgetauscht wird. Es wird verhindert, dass sich beim Filtertausch Anhaftungen in einem verschmutzten Deckelelement 20' lösen, sich direkt in das neu eingesetzte Filterelement setzen und dessen Standzeit reduzieren. Dies gilt gerade dann, wenn das Luftfiltergehäuse mit unten liegendem Deckelelement 20' benutzt wird und sich in dem Deckelelement' 20 aus dem Luftstrom abgeschiedenes Schmutzwasser ansammelt.

## Patentansprüche

1. Luftfiltergehäuse (100') für ein Luftfilterelement (2), mit wenigstens einem Gehäuseunterteil (10'), in das das Luftfilterelement (2) vollständig oder mit einem wesentlichen Teil seiner Länge einsetzbar ist und einem mit dem Gehäuseunterteil (10') zu verbindenden Deckelelement (20'), wobei an dem Gehäuseunterteil (10') Anschlussstutzen (14', 15') zur Verbindung mit jeweils einer Schlauchleitung vorgesehen sind, **dadurch gekennzeichnet, dass** der Anschlussstutzen für die zum Deckelelement (20') weisende Seite des Luftfilterelementes als Umlenkanschlussstutzen (14') ausgebildet ist, der sich wenigstens teilweise außerhalb des durch das Luftfilterelement (2) überdeckten Querschnitts erstreckt und mit dem Gehäuseunterteil (10') verbunden ist wobei der Umlenkanschlussstutzen (14') an einem Kragen (12') an dem Gehäuseunterteil (10') angeformt ist, welcher außerhalb des von einem Luftfilterelement (2) abgedeckten Querschnitts angeordnet ist und welcher sich über eine Abdichtungsebene (E) und/oder ein stirnseitiges Ende des Luftfilterelementes (2) hinaus erstreckt.

2. Luftfiltergehäuse (100') nach Anspruch 1, **dadurch gekennzeichnet, dass** die Mündung des Umlenkanschlussstutzens (14') mit einer durch das Luftfilterelement (2) führenden Strömungshauptrichtung (16') einen Winkel von größer 90° einschließt.

3. Luftfiltergehäuse (100') nach einem der vorhergehenden Ansprüche, **dadurch gekennzeichnet, dass** in dem Umlenkanschlussstutzen (14') ein Abscheidegitter angeordnet ist.

4. Luftfiltergehäuse (100') nach einem der vorhergehenden Ansprüche, **dadurch gekennzeichnet, dass** ein Dichtring (3) eines Luftfilterelements (2) zwischen einer Auflageschulter des Gehäuseunterteils (10') und einer ebene Unterkante (26') des Deckelelements (20') anpressbar ist.

5. Luftfiltergehäuse (100') nach einem der vorhergehenden Ansprüche mit einem darin eingesetzten Luftfilterelement (2).

## Claims

1. Air filter housing (100') for an air filter element (2), with at least one housing lower part (10') into which the air filter element (2) can be inserted either completely or with a significant portion of its length, and with a cover element (20') to be connected with the housing lower part (10'), connecting branches (14' 15') being provided at the housing lower part (10') for being connected each with a hose line, **characterized in that** the connecting branch for the side of the air filter element pointing towards the cover element (20') is designed as a by-passing connecting branch (14') which extends, at least partially, beyond the cross section covered by the air filter element (2) and which is connected with the housing lower part (10'), the by-passing connecting branch (14') being integrally molded to a collar (12') at the housing lower part (10') which is disposed outside of the cross section covered by an air filter element (2) and which extends beyond a sealing plane (E) and/or a frontal end of the air filter element (2).

2. Air filter housing (100') according to claim 1, **characterized in that** the aperture of the by-passing connecting branch (14') forms an angle larger than 90° with a main flow direction (16') leading through the air filter element (2).

3. Air filter housing (100') according to one of the above claims, **characterized in that** a separator grid is disposed in the by-passing connecting branch (14').

4. Air filter housing (100') according to one of the above claims, **characterized in that** a sealing flange (3) of an air filter element (2) can be pressed between a supporting shoulder of the housing lower part (10') and a plane bottom edge (26') of the cover element (20').

5. Air filter housing (100') according to one of the above claims with an air filter element (2) inserted therein.

## Revendications

1. Boîtier de filtre à air (100') pour un élément de filtre à air (2) avec au moins une partie inférieure de boîtier (10') dans laquelle l'élément de filtre à air (2) peut être inséré entièrement ou sur la majeure partie de sa longueur et avec un élément de couvercle (20') devant être assemblé avec la partie inférieure de boîtier (10'), des tubulures de raccord (14', 15') étant prévues sur la partie inférieure de boîtier (10') en vue d'être reliées à respectivement un tuyau, **caractérisé en ce que** la tubulure de raccord pour le côté de l'élément de filtre à air orienté vers l'élément de couvercle (20') est conçue comme tubulure de raccord déflectrice (14') qui s'étend au moins en partie hors de la section recouverte par l'élément de filtre à air (2) et est reliée avec la partie inférieure de boîtier (10'), la tubulure de raccord déflectrice (14') étant formée sur un collet (12') de la partie inférieure de boîtier (10') qui est disposé hors de la section recouverte par un élément de filtre à air (2) et qui s'étend au-delà d'un plan d'étanchéité (E) et/ou d'une extrémité frontale de l'élément de filtre à air (2).

2. Boîtier de filtre à air (100') selon la revendication 1, **caractérisé en ce que** la bouche de la tubulure de raccord déflectrice (14') forme un angle supérieur à 90° avec un sens principal de flux (16') traversant l'élément de filtre à air (2).

3. Boîtier de filtre à air (100') selon l'une des revendications précédentes, **caractérisé en ce qu'**une grille de séparation est disposée dans la tubulure de raccord déflectrice (14').

4. Boîtier de filtre à air (100') selon l'une des revendications précédentes, **caractérisé en ce qu'**une bague d'étanchéité (3) d'un élément de filtre à air (2) peut être pressée entre un épaulement d'appui de la partie inférieure de boîtier (10') et un bord inférieur plan (26') de l'élément de couvercle (20').

5. Boîtier de filtre à air (100') selon l'une des revendications précédentes avec un élément de filtre à air (2) inséré à l'intérieur.
